# EUROPEAN PATENT SPECIFICATION

(11) **EP 4 524 082 B1**
(45) Date of publication and mention of the grant of the patent: **07.10.2026**
(21) Application number: 24199018.3
(22) Date of filing: 06.09.2024
(51) Int. Cl.: B66F 9/065, B66F 9/075, B66F 9/24, B66F 17/00, G06V 10/94, G06V 20/20, G06V 20/58, G06V 20/64

(54) **MULTIFUNCTIONAL LIFTING VEHICLE AND RELATIVE MIXED-REALITY VIEWER DEVICE**
MULTIFUNKTIONELLES HUBFAHRZEUG UND ZUGEHÖRIGE MIXED-REALITY-BETRACHTERVORRICHTUNG
VÉHICULE DE LEVAGE MULTIFONCTIONNEL ET DISPOSITIF DE VISUALISATION DE RÉALITÉ MIXTE RELATIVE

(30) Priority: 14.09.2023 IT 202300018924
(43) Date of publication of application: 19.03.2025
(73) Proprietor: Merlo Project S.r.l., I-12010 - Cervasca (Cuneo) (IT)
(72) Inventor: CONTESSINI, Mr. Felice, I-12010 Cervasca (Cuneo) (IT); LOPEZ, Mr. Federico, I-12010 Cervasca (Cuneo) (IT)
(74) Representative: Buzzi, Notaro & Antonielli d'Oulx S.p.A.

(56) References cited:
- EP-A1- 3 926 107
- EP-B1- 3 495 316
- CN-A- 104 662 389
- CN-A- 112 479 037
- US-A1- 2020 048 052
- US-A1- 2020 198 939
- US-A1- 2021 381 203
- US-A1- 2022 136 215
- US-A1- 2022 194 769
- US-A1- 2022 234 867
- US-A1- 2023 035 181

## Description

### Field of the invention

The present invention relates to a multifunctional lifting vehicle comprising
- a base frame,
- a lifting assembly including at least one operating arm equipped with a connection section for mounting a tool,
- a control system of the lifting assembly, comprising at least one electronic control unit and a plurality of sensors arranged to acquire a plurality of stability data of the vehicle, including the position of the arm relative to the base frame, and the amount of load lifted by the tool.

### Prior art

Lifting vehicles of the type indicated above may be equipped with different types of tools, such as for example forks, shovels, aerial platforms, etc. During operation, the load applied to the tool located at the end of the arm may vary widely.

These vehicles are equipped with a load diagram which prescribes the maximum load that can be applied to the end of the lifting arm depending on the position of the arm. Therefore, the load diagram is calculated and made available to the operator, in order to comply with the safety requirements relating to vehicle stability, defining the vehicle maneuvers that ensure stability against overturning.

Currently, the operator controlling the vehicle (from inside the driving cab or from a remote location) may in some cases have his view obstructed by objects that interpose themselves along his field of vision. In particular, external objects or parts of the vehicle itself (such as the front uprights forming the driving cab or other parts of the frame) may prevent a complete view of the surrounding environment from different angles, generating significant difficulties in maneuvering the vehicle itself or in moving the load raised at the end of the lifting arm, in compliance with the safety and stability requirements indicated above. In this context, the documents US2022136215A1 and EP3495316B1 describe vehicles equipped with a related data acquisition system to detect information useful for managing a lifted load. US2022136215A1 discloses the preamble of claim 1.

However, there is still a need to propose an improved solution.

### Object of the invention

The aim of the present invention is to overcome the technical problems previously described.

In particular, it is an object of the present invention to create a lifting vehicle of the type indicated above, designed to assist the operator in driving and managing the load, even in specific circumstances which determine non-visible areas and difficult to predict scenarios that may be critical for the safety and stability of the vehicle.

A further object of the invention is to implement such a solution with relatively simple and low-cost means, without requiring any particular knowledge from the operator who drives the aforesaid vehicle from the cab or remotely.

### Summary of the invention

The object of the present invention is achieved by a lifting vehicle having the characteristics forming the subject of one or more of the claims that follow, which form an integral part of the technical disclosure given here in relation to the invention.

In particular, the object of the invention is achieved by a multifunctional lifting vehicle comprising:
- a base frame,
- a lifting assembly including at least one operating arm equipped with a connection section for mounting a tool,
- a control system of the lifting assembly, comprising at least one electronic control unit and a plurality of sensors arranged to acquire a plurality of stability data of the vehicle, including the position of the arm relative to the base frame and the amount of load lifted by the tool,
characterized in that said multifunctional lifting vehicle also comprises:
- a vision system mounted on the base frame, comprising at least one camera configured to acquire images and detect events occurring outside the vehicle, and at least one detection device to measure the distance of an object outside the vehicle,
- a mixed-reality viewer device of the head-up display type with video pass-through, operatively connected to said electronic control unit, configured and programmed to generate a mixed-reality visualization of the surrounding environment, by combining the real physical environment with virtual elements specifically generated to facilitate in real time driving of the vehicle and the load management.

The invention is also directed to a method for managing a load moved by means of a multifunctional lifting vehicle, as indicated in the attached claim 15.

### Brief description of the figures

Further characteristics and advantages of the invention will become apparent from the description that follows with reference to the attached drawings, provided purely by way of non-limiting example, wherein:
- Figure 1 is a schematic side view of a multifunctional lifting vehicle according to of an embodiment of the present invention,
- Figures 2, 3 are schematic views of the vehicle showing different detection areas of a vision system,
- Figure 4 is a perspective view illustrating a mixed-reality viewer device with video pass-through according to one embodiment,
- Figures 5-7 are further schematic views illustrating some examples of information generated by the mixed-reality viewer device,
- Figure 8 is a flow chart illustrating a sequence of operation of the vehicle illustrated in the previous figures.

### Detailed description of the embodiments of the invention

In the following description various specific details are illustrated aimed at a thorough understanding of examples of one or more embodiments. The embodiments may be implemented without one or more of the specific details, or with other methods, components, materials, etc. In other cases, known structures, materials or operations are not shown or described in detail to avoid obscuring various aspects of the embodiments.

The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment.

Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not therefore delimit the field of protection or the scope of the embodiments.

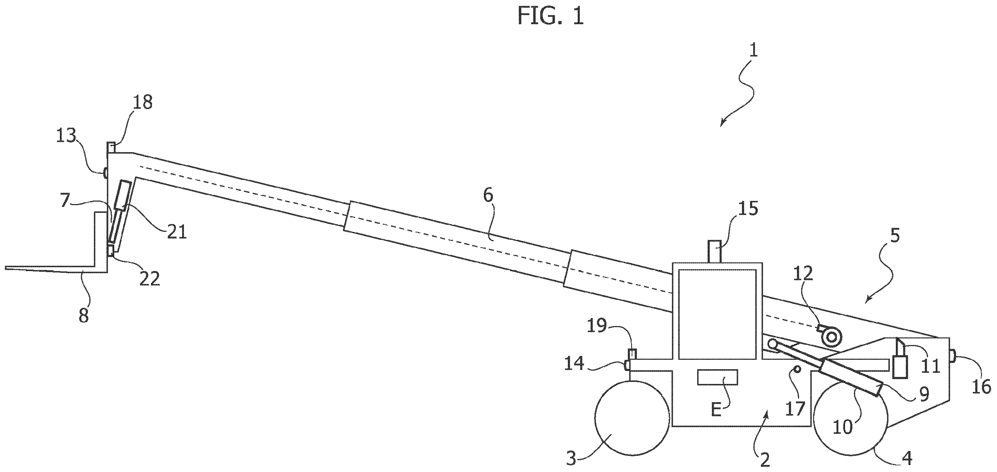

With reference to Figure 1, numeral 1 indicates a multifunctional lifting vehicle according to a preferred embodiment of the present invention.

The vehicle 1 includes a base frame 2 equipped with front support means 3 and rear support means 4, for example, wheels and/or stabilizers. The base frame 2 may be advantageously made in the form of a fixed, self-propelled or rotating frame.

The vehicle 1 also comprises a lifting assembly 5 comprising at least one operating arm 6 articulated in the rear section of the frame 2 about a transverse axis.

The lifting assembly 5 may advantageously comprise a single operating arm 6 or two arms articulated together. One or more of said arms 6 may be telescopic, as illustrated in Figure 1, configured so as to vary the prominence with respect to the base frame 2.

Again with reference to Figure 1, the actuation assembly 5 is equipped at one of its terminal ends with an attachment 7 for connecting different types of tools 8, such as for example forks, shovels, aerial platforms, etc.

In a way known in itself, the vehicle 1 also comprises a drive system configured to operate the lifting assembly 5 carrying the tool 8. In one or more embodiments the drive system comprises at least one lifting/lowering cylinder 9 with ends articulated to the frame 2 and to the arm 6. In one or more embodiments, the drive system may further comprise a hydraulic drive circuit including a main pump driven by a motor of the vehicle. The details relating to the hydraulic circuit are not described here, as they are widely known to the expert in the field in question.

According to a further characteristic, the multifunctional lifting vehicle 1 comprises a control system associated with the drive system of the vehicle 1. The control system comprises an electronic control unit E arranged to control, among other things, respective operating valves of a hydraulic circuit for the operation of the lifting assembly 5, also as a function of a plurality of sensors detailed below.

In one or more embodiments, the control system comprises a load sensor 10, which provides an indication of the intensity of the load applied to the end of the lifting arm 6. The load sensor 10 may, for example, be made in the form of a load cell applied to the lifting/lowering cylinder 9.

The control system may also comprise sensors 11, 12 which respectively detect the inclination angle of the arm and the extension length of the telescopic portion of the arm 6.

The control system may further comprise at least one sensor 21 for determining the inclination angle of the tool mounted at the end of the arm (raft angle sensor).

According to further characteristics, the control system may further comprise one or more sensors to detect the load on the support means 3, 4 of the vehicle 1 and possibly to detect the extension of the stabilizers and/or the rotation angle of an upper portion of the frame 2.

According to a further characteristic, the control system may comprise a recognition unit 22 configured for recognizing the type of equipment applied to the arm 6. The recognition unit 22 may, for example, be based on RFID technology.

According to a further characteristic, the electronic control unit E can be configured to autonomously define a load diagram of the vehicle 1 based on various operating parameters of the vehicle, including those detected by the sensors described above, and the type of tool 8 connected to the arm 6.

The load diagram schematically shows an operational working area within which the vehicle is operated in conditions of safety with respect to overturning. In fact, the expression working area means a safe operating space, defined as having a known load on the tool and the type of connected tool, as well as any other parameters revealed by the sensors as indicated above.

According to an essential characteristic of the present invention, illustrated by way of example in Figures 1-3, the lifting vehicle 1 further comprises a vision system mounted on the frame 2, comprising:
- at least one camera configured to acquire images and detect events occurring outside the vehicle 1 in the direction wherein that camera is facing, and
- at least one sensing instrument for detecting the distance of an object external to the vehicle 1.

In one or more embodiments, as illustrated in Figure 1, the vision system comprises a first camera 13 mounted at the end of the arm 6 in proximity to the attachment 7 for connecting the tool 8.

In one or more embodiments, the vision system comprises a second camera 14 mounted on a front part of the frame 2, so as to acquire images of the scenario in front of the frame 2 at a lower height than the first camera 13.

In one or more embodiments, the vision system comprises a third camera 15 mounted on the top of the frame 2, in particular above an upper horizontal wall defining the driving cab of the vehicle 1.

In one or more embodiments, the vision system comprises a fourth camera 16 mounted on a rear end of the frame 2, in order to acquire images of the scenario that appears behind the vehicle 1.

In one or more embodiments, the vision system comprises additional cameras 17 mounted along a respective side panel of the frame 2.

Of course, the terms front, rear and side refer to the condition of the vehicle operating on the ground, for example, as illustrated in Figure 1.

According to a further characteristic, one or more of the aforesaid cameras 13,14,15,16,17, in particular the third camera 15, may be 360° omnidirectional cameras to maximize the field of view covered by the camera lens.

As previously indicated, the vision system also comprises at least one detection device for determining the distance of an object external to the vehicle 1, possibly framed by one of the aforesaid cameras.

The term detection instrument refers to a device capable of detecting the presence of objects external to the vehicle, for example, with radar or lidar technology or stereo cameras, determining the position and distance of an object from the point wherein the device is positioned. According to a technique known in itself, the operation is based on the principle of transmission and reception of a signal intercepted by external objects.

In this perspective, in one or more embodiments, the vision system comprises a first detection device 18 positioned at the end of the arm 6 near the attachment 7.

The vision system also comprises at least one second detection instrument 19 positioned, preferably, on the front part of the frame 2, in proximity to the second camera 14 and, alternatively, also on the rear part of the frame 2, in proximity to the fourth camera 16.

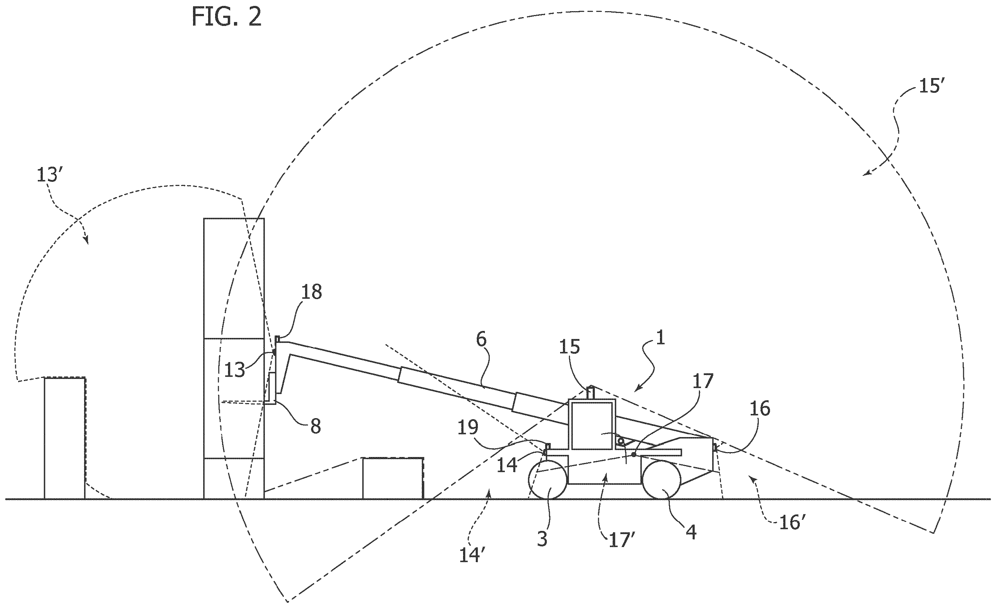

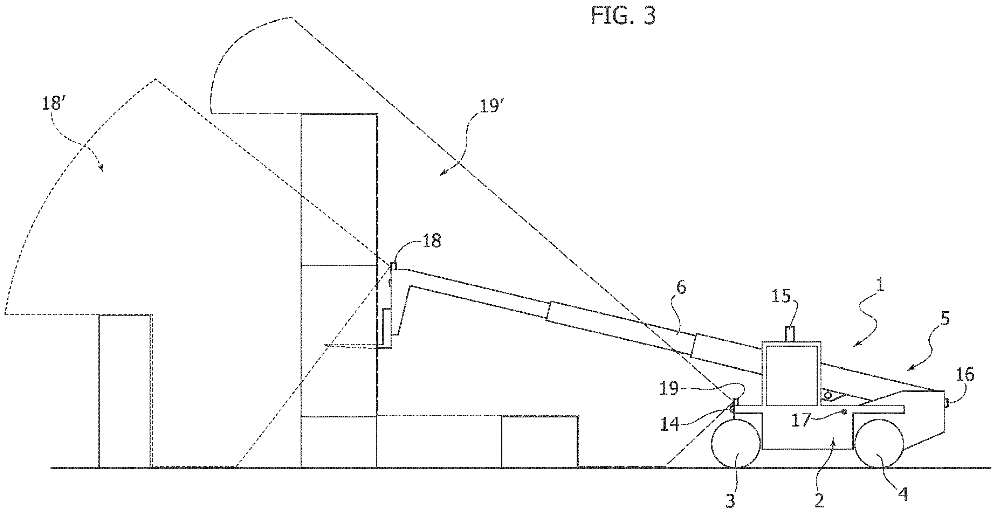

Figures 2, 3 are schematic views of the vehicle that highlight the field of vision generated by the individual components of the system described above. More specifically, in Figure 2, the reference 13' indicates the field of vision of the first camera 13, the reference 15' indicates the field of vision, preferably spherical, of the third camera 15, and the references 14',16',17' indicate the fields of vision of the second camera 14, the fourth camera 16 and the side cameras 17, respectively. In Figure 3, the references 18' and 19' indicate, respectively, the detection areas of the first detection device and the second detection device.

In light of the characteristics described above, it will be appreciated that the vehicle 1 is equipped with instrumentation capable of generating a complete mapping of the surrounding scenario, so as to make available a multitude of data to be displayed, if necessary, following processing.

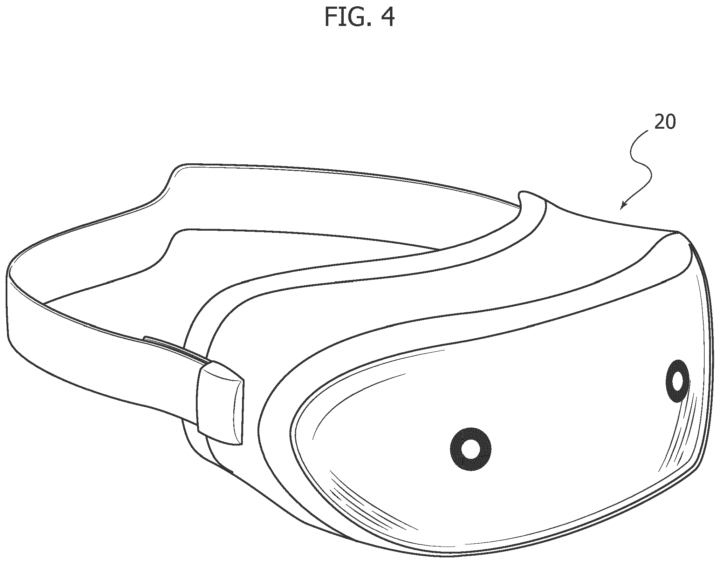

According to a further characteristic of the present invention, illustrated by way of example in Figure 4, the vehicle 1 comprises a mixed-reality viewing device 20 of the head-up display type with video pass-through, wearable by an operator and operationally connectable to the electronic control unit E of the vehicle 1.

In one or more embodiments, the viewing device 20 comprises a display element to be placed in front of the operator's eyes and a support structure to stably position the viewing device 20 on the operator's head. The support structure may comprise, for example, a band that wraps around the operator's head and/or side support rods.

Advantageously, the device thus created allows the operator to view mixed-reality information directly in front of his eyes, thus improving visual perception, without having to look away from the field of vision during maneuvers, and also to continue to view the information even in the case of remote control of the vehicle (outside the cab).

The term "video pass-through" refers to a visor designed to allow the operator wearing the visor to view the real surrounding environment. The real world can then be viewed through the display element of the visor, by superimposing virtual elements (e.g. reconstructed 3D objects, textual information, graphics, etc.) onto the real environment.

As will be appreciated below, the viewing device 20 allows a plurality of information on the surrounding environment to be displayed before the eyes, which is of assistance in driving the vehicle and managing the lifted load, following processing of the data acquired by the vision system.

In one or more embodiments, the viewing device 20 comprises an electronic processor (not illustrated) operatively in communication with the electronic unit E of the vehicle, to receive display data acquired by the vision system present on board the vehicle, possibly in correlation with the processing carried out by the unit E.

In this regard, in one or more embodiments, the viewing device 20 is configured to receive a plurality of data detected by the electronic unit E of the vehicle, by the vision system and by other devices in the on-board or remote control station, and to process said data in order to generate a mixed-reality visualization of the surrounding environment and of the vehicle, combining the real physical environment and virtual elements specifically generated to facilitate real-time driving of the vehicle and load management.

In all embodiments, vehicle 1 is therefore designed to acquire, through the vision system, a plurality of data relating to events and/or objects outside the vehicle during real-time use of the vehicle itself. The data may be transmitted automatically, for example, wirelessly or via cable, to the viewer device 20, with or without related processing by the electronic unit E.

According to a further characteristic, the electronic unit E of the vehicle 1 and/or the processor of the viewing device 20 are configured to use automatic data analysis algorithms based on machine learning principles, in order to integrate the acquired data and provide the user with a mixed-reality visualization of the environment.

As is known, the operator sitting inside the driving cab of the vehicle, or from a remote position may in some cases have his view obstructed by objects that interpose themselves along his field of vision. **In** particular, external objects or parts of the vehicle itself such as the front uprights forming the driving cab, may prevent the complete view of the surrounding environment from different angles, generating significant difficulties in maneuvering the vehicle itself or in moving the load raised at the end of the lifting arm, in compliance with the safety and stability requirements indicated above.

In this perspective, according to a first advantageous characteristic, the mixed-reality visualization allows an external view to be obtained with respect to the vehicle, free from objects that prevent the complete vision of the environment to the operator sitting in the cab or from a remote position.

In other words, the viewing device 20 then displays a mixed reality reproduction with parts of the surrounding environment hidden from the view of the operator at the vehicle controls in the cab or from a remote location.

According to a further preferred characteristic, by means of at least one control element associated with the viewing device 20, such as for example a push-button panel separate from the device 20 or a built-in key, the user will be able to move the observation point, for example, to the distal end of the arm 6, or will be able to select further observation modes, for example, showing some elements of the machine in transparency or removing others.

According to a further preferred characteristic, the mixed-reality viewer device 20 is configured to show several overlaid pieces of information useful to the operator for driving the vehicle and managing the lifted load, such as the type of tool 8 connected and weight of the lifted load.

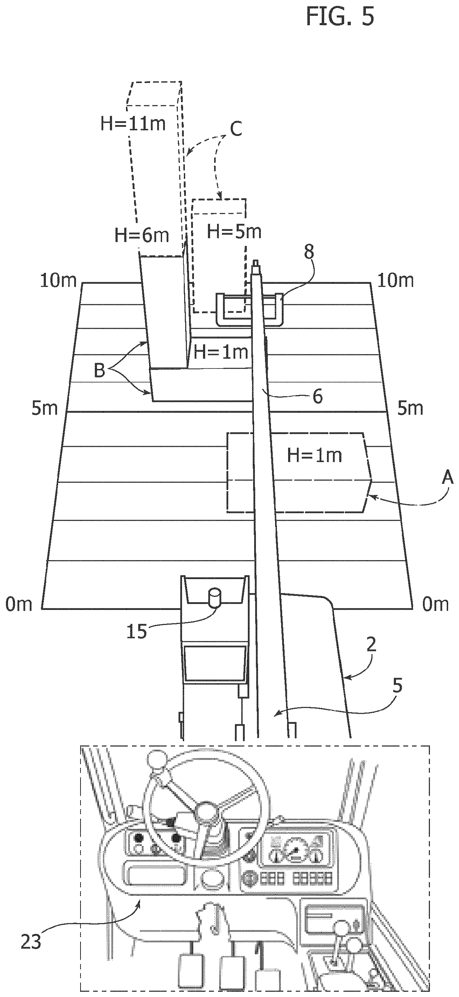

As previously indicated, the viewing device 20 is configured to generate a mixed-reality display, illustrated by way of example in Figure 5, combining the real physical environment and virtual elements specifically generated to facilitate real-time vehicle driving and load management, thanks to the further possibility of combining this display with that of the control devices 23 of the position use acquired via video pass-through.

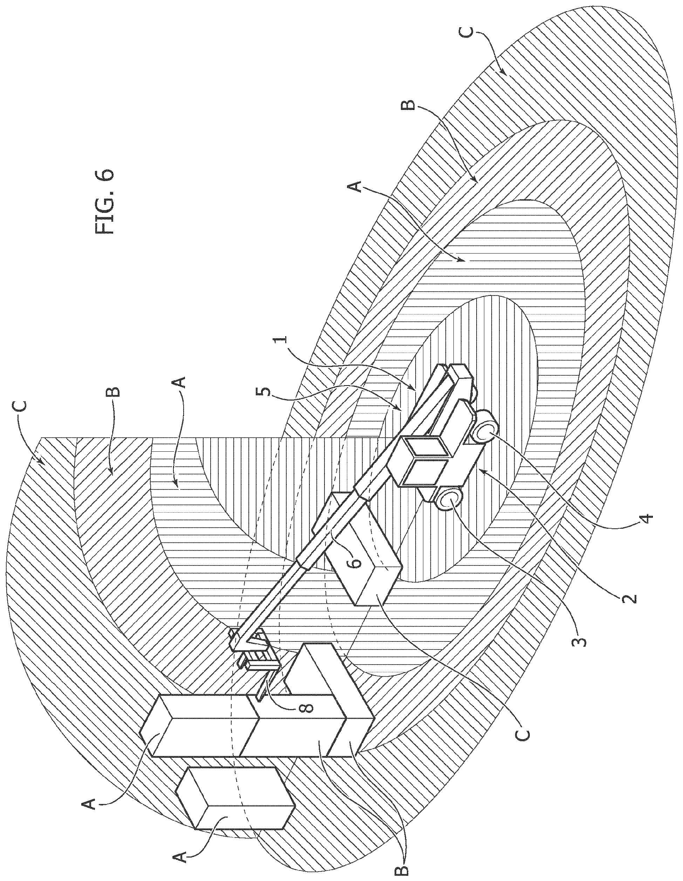

According to a further advantageous characteristic, illustrated by way of example in Figures 5-7, the mixed-reality visualization comprises a visualization of the various elements of the surrounding environment, associating these elements with different colored load bands as a consequence of the possibility of controlling the vehicle to interact with a given element in safe or unsafe conditions. In other words, the surrounding environment may be visualized according to relative sub-areas, in particular:
- areas with permitted operations A (for example, displayed in green), both due to the possibility of reaching a point within these areas, and due to the possibility of managing the lifted load while respecting the stability requirements based on the lifted load and the position of the arm;
- areas with operations close to the permitted limit B (for example, displayed in yellow); and
- areas with prohibited operations C (for example, displayed in red), due to the impossibility of reaching a point within that area or due to the impossibility of managing the lifted load while respecting the stability requirements based on the lifted load and the position of the arm.

The calculation of the relative sub-areas A,B,C originates from the multitude of data acquired with the cameras 13,14,15,16,17, the detection devices 18,19 and the sensors 10,11,12,21,22 on board the vehicle which detect various operating parameters of the vehicle itself (type of tool, total weight of the load, arm inclination angle, arm length, etc.)

Please note that the reproductions illustrated in Figures 5-7 are shown purely as non-limiting examples, as the reproduction viewed by the operator reflects the observation point of the operator seated in the driving cab.

According to a further advantageous characteristic, in addition to the aforesaid augmented reality display with load bands A,B,C, the displayed information comprises a grid of values for indicating the distances and heights of the various elements of the surrounding environment.

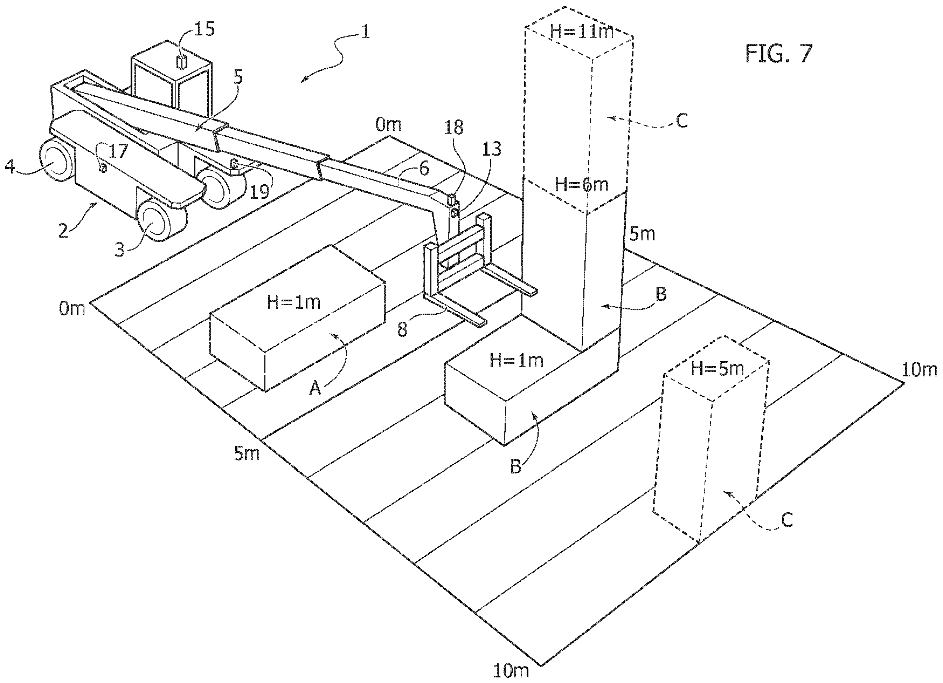

As an example, Figure 7 shows the front value grid, but this can also be the rear one.

Therefore, by means of the augmented reality viewing device 20 connected to the electronic unit E and the vision system mounted on the vehicle 1, the operator is constantly informed in real time about the operations that can be carried out by the vehicle 1 in accordance with the stability and safety conditions, so as to operate up to the limit of the capabilities of the vehicle, or maintaining a safe distance from external objects, without risking incurring maneuver errors caused by an incorrect assessment of the surrounding environment or obstacles to the operator's complete vision. The operator will constantly have before his eyes the main information needed to drive the vehicle, without having to carefully evaluate the environment based on his subjective perception and his knowledge of the stability capabilities of the vehicle.

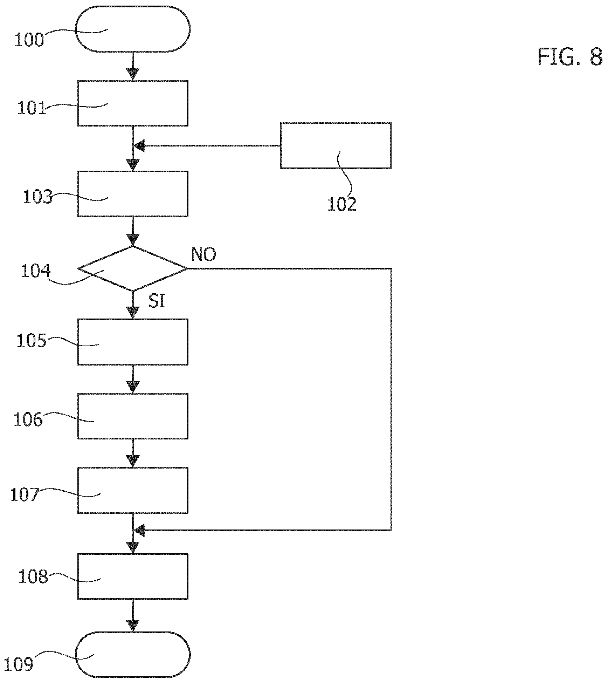

In light of the characteristics described previously, Figure 8 shows a flow diagram illustrating the operation of the vehicle 1 and the related augmented-reality viewing device, according to an embodiment:
- block 100 shows the start of the operations to use the vehicle and the related augmented-reality viewing device;
- block 101 indicates a detection step of the parameters of the lifted load;
- block 102 indicates the possibility of calculating a relative load diagram;
- block 103 shows a preliminary setup step carried out using the control devices 23 in the cab or with a remote control;
- block 104 shows the possibility of wearing the mixed-reality headset with video pass-through;
- if so, block 105 illustrates a scanning step of the surrounding environment using the vision system;
- block 106 indicates a processing step of the data acquired by the vision system;
- block 107 indicates a step of displaying the processed images on the viewer;
- block 108 illustrates a load handling step, and;
- block 109 indicates the end of the operating steps of driving the vehicle.

Of course, without prejudice to the principle of the invention, the details of construction and the embodiments may vary widely with respect to those described and illustrated purely by way of example, without departing from the scope of the present invention, as determined by the attached claims.

## Claims

1. A multifunctional lifting vehicle (1) comprising:
- a base frame (2),
- a lifting assembly (5) including at least one operating arm (6) equipped with an attachment (7) for mounting a tool (8),
- a control system of the lifting assembly (5), comprising at least one electronic control unit (E) and a plurality of sensors (10,11,12,21,22) arranged to acquire a plurality of stability data of the vehicle (1), including the position of the arm relative to the base frame (2) and the amount of load lifted by the tool (8),
- a vision system mounted on the base frame (2), comprising at least one camera (13,14,15,16,17) configured to acquire images and detect events occurring outside the vehicle (1), and at least one detection device (18,19) to measure the distance of an object outside the vehicle (1),
- a viewer device (20) of the head-up display type operatively connected to said electronic control unit (E), configured and programmed to generate a visualization of the surrounding environment on the basis of data acquired through the vision system, by combining the real physical environment with virtual elements specifically generated to facilitate in real time driving of the vehicle (1) and the load management,
**characterized in that**:
- said viewer device (20) of the head-up display type is a mixed reality viewer device with video pass through,
- said visualization of the surrounding environment is a mixed reality visualization,
- said mixed-reality viewing device (20) of the head-up display type with video pass-through, is a device wearable by an operator and operationally connectable to the electronic control unit (E) of the vehicle (1), said wearable device comprising a display element to be placed in front of the operator's eyes and a support structure to stably position the device on the operator's head.

2. A multifunctional lifting vehicle (1) according to claim 1, **characterized in that** the electronic control unit (E) is arranged for controlling respective operating valves of a hydraulic circuit for operating the lifting assembly (5).

3. A multifunctional lifting vehicle (1) according to claims 1 or 2, **characterized in that** the control system may comprise an identification unit configured for identifying the type of tool (8) applied to the arm (6).

4. A multifunctional lifting vehicle (1) according to any of the previous claims, **characterized in that** the vision system comprises one or more of the following cameras:
- a first camera (13) mounted at the end of the arm (6) in proximity of the attachment (7) for connecting the tool (8),
- a second camera (14) mounted on a front part of the frame (2), so as to acquire images of the scenario in front of the frame (2) at a lower height than the first camera (13),
- a third camera (15) mounted on the top of the frame (2), in particular above an upper horizontal wall defining a driving cab of the vehicle (1),
- a fourth camera (16) mounted on a rear end of the frame (2), in order to acquire images of the scenario that appears behind the vehicle (1),
- additional cameras (17) mounted along a respective side panel of the frame (2).

5. A multifunctional lifting vehicle (1) according to any of the previous claims, **characterized in that** said detection device (18,19) is configured to transmit/receive signals with radar or lidar technology or stereo cameras, for detecting the presence of external objects and calculating the position and distance of an object relative to the vehicle (1).

6. A multifunctional lifting vehicle (1) according to claim 5, **characterized in that** the vision system comprises a first detection device (18) positioned at the end of the arm (6) and/or a second detection instrument (19) positioned on a front part of the frame (2).

7. A multifunctional lifting vehicle (1) according to any of the previous claims, **characterized in that** the viewer device (20) comprises an electronic processor operatively in communication with the electronic unit (E) of the vehicle, to receive data acquired by means of said sensors (10,11,12,21,22) and the vision system.

8. A multifunctional lifting vehicle (1) according to claim 7, **characterized in that** the electronic unit (E) of the vehicle (1) and/or the processor of the viewer device (20) are configured to use automatic data analysis algorithms based on principles of machine learning.

9. A multifunctional lifting vehicle (1) according to any of the previous claims, **characterized in that** said mixed-reality visualization comprises a reproduction of some parts of the surrounding environment which are hidden from the view of the operator located at a control station of the vehicle (1), onboard or remote, combined with a view of related control devices.

10. A multifunctional lifting vehicle (1) according to any of the previous claims, **characterized in that** it comprises at least one control element associated with the viewer device (20), for varying the observation point of the mixed reproduction and/or a viewing mode of some vehicle parts (1).

11. A multifunctional lifting vehicle (1) according to any of the previous claims, **characterized in that** the mixed-reality viewer device (20) is configured to show several overlaid pieces of information useful to the operator for driving the vehicle and managing the lifted load, such as the type of tool (8) connected and/or the position and weight of the lifted load.

12. A multifunctional lifting vehicle (1) according to any of the previous claims, **characterized in that** said mixed-reality visualization includes a visualization of the various elements of the surrounding environment, associating such elements with different load bands according to the possibility of controlling the vehicle to interact with a determined element in safe conditions or not.

13. A multifunctional lifting vehicle (1) according to claim 12, **characterized in that** that said load bands are reproduced according to different sub-areas of the overall area of the work environment, in particular:
- areas with permitted operations (A), wherein the vehicle (1) may reach a point included in these areas (A), and manage the lifted load, by respecting stability requirements depending on the lifted load and the position of the arm (6);
- areas with operations in the proximity of the permitted limit (B); and
- areas with prohibited operations (C), wherein the vehicle (1) is unable to reach a point included in these areas (C) or to manage the lifted load, by respecting stability requirements depending on the lifted load and the position of the arm (6).

14. A multifunctional lifting vehicle (1) according to claim 13, **characterized in that** the information displayed comprises a grid of values for indicating the distances and heights of the various elements of the surrounding environment.

15. A method for managing a load moved by a multifunctional lifting vehicle (1) according to any of the previous claims, comprising:
- connecting the viewer device (20) to the electronic unit (E) of the vehicle (1);
- activating the vision system;
- controlling the vehicle (1) from a driving cab of said vehicle (1) or from a remote location;
- generating a mixed-reality visualization of the surrounding environment on the basis of data acquired through the vision system (20), by combining the real physical environment with virtual elements specifically generated to facilitate in real time driving of the vehicle (1) and the load management.

## Patentansprüche

1. Ein multifunktionales Hubfahrzeug (1), umfassend:
- einen Basisrahmen (2),
- eine Hubbaugruppe (5), die mindestens einen Betriebsarm (6) umfasst, der mit einem Anbaugerät (7) zur Montage eines Werkzeugs (8) ausgestattet ist,
- ein Steuerungssystem der Hubbaugruppe (5), umfassend mindestens eine elektronische Steuereinheit (E) und eine Vielzahl von Sensoren (10, 11, 12, 21, 22), die eingerichtet sind, um eine Vielzahl von Stabilitätsdaten des Fahrzeugs (1) zu erfassen, einschließlich der Position des Arms relativ zum Basisrahmen (2) und der Menge der durch das Werkzeug (8) gehobenen Last,
- ein am Basisrahmen (2) montiertes Sichtsystem, umfassend mindestens eine Kamera (13, 14, 15, 16, 17), die konfiguriert ist, um Bilder aufzunehmen und Ereignisse außerhalb des Fahrzeugs (1) zu erkennen, und mindestens eine Erfassungsvorrichtung (18, 19) zur Messung des Abstands eines Objekts außerhalb des Fahrzeugs (1),
- eine Anzeigevorrichtung (20) vom Typ Head-up-Display, die betriebsmäßig mit der genannten elektronischen Steuereinheit (E) verbunden ist, konfiguriert und programmiert, um eine Visualisierung der Umgebung auf der Grundlage von durch das Sichtsystem erfassten Daten zu erzeugen, durch Kombination der realen physischen Umgebung mit spezifisch erzeugten virtuellen Elementen, um das Fahren des Fahrzeugs (1) und das Lastmanagement in Echtzeit zu erleichtern,
**dadurch gekennzeichnet, dass**:
- die genannte Anzeigevorrichtung (20) vom Typ Head-up-Display eine Mixed-Reality-Anzeigevorrichtung mit Video-Durchsicht ist,
- die genannte Visualisierung der Umgebung eine Mixed-Reality-Visualisierung ist,
- die genannte Mixed-Reality-Anzeigevorrichtung (20) vom Typ Head-up-Display mit Video-Durchsicht eine von einem Bediener tragbare und betriebsmäßig mit der elektronischen Steuereinheit (E) des Fahrzeugs (1) verbindbare Vorrichtung ist, wobei die genannte tragbare Vorrichtung ein Anzeigeelement, das vor den Augen des Bedieners zu platzieren ist, und eine Trägerstruktur zur stabilen Positionierung der Vorrichtung auf dem Kopf des Bedieners umfasst.

2. Ein multifunktionales Hubfahrzeug (1) nach Anspruch 1, **dadurch gekennzeichnet, dass** die elektronische Steuereinheit (E) zur Steuerung jeweiliger Betriebsventile eines Hydraulikkreislaufs zum Betreiben der Hubbaugruppe (5) eingerichtet ist.

3. Ein multifunktionales Hubfahrzeug (1) nach Anspruch 1 oder 2, **dadurch gekennzeichnet, dass** das Steuerungssystem eine Identifikationseinheit umfassen kann, die konfiguriert ist, um die Art des an dem Arm (6) angebrachten Werkzeugs (8) zu identifizieren.

4. Ein multifunktionales Hubfahrzeug (1) nach einem der vorhergehenden Ansprüche, **dadurch gekennzeichnet, dass** das Sichtsystem eine oder mehrere der folgenden Kameras umfasst:
- eine erste Kamera (13), die am Ende des Arms (6) in der Nähe des Anbaugeräts (7) zum Anschließen des Werkzeugs (8) montiert ist,
- eine zweite Kamera (14), die an einem vorderen Teil des Rahmens (2) montiert ist, um Bilder des Szenarios vor dem Rahmen (2) in einer geringeren Höhe als die erste Kamera (13) aufzunehmen,
- eine dritte Kamera (15), die auf der Oberseite des Rahmens (2) montiert ist, insbesondere oberhalb einer oberen horizontalen Wand, die eine Fahrerkabine des Fahrzeugs (1) definiert,
- eine vierte Kamera (16), die an einem hinteren Ende des Rahmens (2) montiert ist, um Bilder des Szenarios aufzunehmen, das hinter dem Fahrzeug (1) erscheint,
- zusätzliche Kameras (17), die entlang einer jeweiligen Seitenverkleidung des Rahmens (2) montiert sind.

5. Ein multifunktionales Hubfahrzeug (1) nach einem der vorhergehenden Ansprüche, **dadurch gekennzeichnet, dass** die genannte Erfassungsvorrichtung (18, 19) konfiguriert ist, um Signale mit Radar- oder Lidar-Technologie oder Stereokameras zu senden/empfangen, um das Vorhandensein externer Objekte zu erkennen und die Position und Entfernung eines Objekts relativ zum Fahrzeug (1) zu berechnen.

6. Ein multifunktionales Hubfahrzeug (1) nach Anspruch 5, **dadurch gekennzeichnet, dass** das Sichtsystem eine erste Erfassungsvorrichtung (18), die am Ende des Arms (6) positioniert ist, und/oder ein zweites Erfassungsinstrument (19), das an einem vorderen Teil des Rahmens (2) positioniert ist, umfasst.

7. Ein multifunktionales Hubfahrzeug (1) nach einem der vorhergehenden Ansprüche, **dadurch gekennzeichnet, dass** die Anzeigevorrichtung (20) einen elektronischen Prozessor umfasst, der betriebsmäßig mit der elektronischen Einheit (E) des Fahrzeugs in Kommunikation steht, um Daten zu empfangen, die mittels der genannten Sensoren (10, 11, 12, 21, 22) und des Sichtsystems erfasst wurden.

8. Ein multifunktionales Hubfahrzeug (1) nach Anspruch 7, **dadurch gekennzeichnet, dass** die elektronische Einheit (E) des Fahrzeugs (1) und/oder der Prozessor der Anzeigevorrichtung (20) konfiguriert sind, um automatische Datenanalysealgorithmen basierend auf Prinzipien des maschinellen Lernens zu verwenden.

9. Ein multifunktionales Hubfahrzeug (1) nach einem der vorhergehenden Ansprüche, **dadurch gekennzeichnet, dass** die genannte Mixed-Reality-Visualisierung eine Wiedergabe einiger Teile der Umgebung umfasst, die für die Sicht des Bedieners, der sich an einer Steuerstation des Fahrzeugs (1) befindet, an Bord oder entfernt, verborgen sind, kombiniert mit einer Ansicht zugehöriger Steuervorrichtungen.

10. Ein multifunktionales Hubfahrzeug (1) nach einem der vorhergehenden Ansprüche, **dadurch gekennzeichnet, dass** es mindestens ein der Anzeigevorrichtung (20) zugeordnetes Steuerelement umfasst, um den Beobachtungspunkt der Mixed-Wiedergabe und/oder eine Betrachtungsart einiger Fahrzeugteile (1) zu variieren.

11. Ein multifunktionales Hubfahrzeug (1) nach einem der vorhergehenden Ansprüche, **dadurch gekennzeichnet, dass** die Mixed-Reality-Anzeigevorrichtung (20) konfiguriert ist, um mehrere überlagerte Informationen anzuzeigen, die für den Bediener zum Fahren des Fahrzeugs und zum Verwalten der gehobenen Last nützlich sind, wie die Art des angeschlossenen Werkzeugs (8) und/oder die Position und das Gewicht der gehobenen Last.

12. Ein multifunktionales Hubfahrzeug (1) nach einem der vorhergehenden Ansprüche, **dadurch gekennzeichnet, dass** die genannte Mixed-Reality-Visualisierung eine Visualisierung der verschiedenen Elemente der Umgebung umfasst, wobei diese Elemente verschiedenen Lastbändern gemäß der Möglichkeit der Steuerung des Fahrzeugs zur Interaktion mit einem bestimmten Element unter sicheren Bedingungen oder nicht zugeordnet werden.

13. Ein multifunktionales Hubfahrzeug (1) nach Anspruch 12, **dadurch gekennzeichnet, dass** die genannten Lastbänder gemäß verschiedenen Unterbereichen des Gesamtbereichs der Arbeitsumgebung wiedergegeben werden, insbesondere:
- Bereiche mit zulässigen Vorgängen (A), wobei das Fahrzeug (1) einen in diesen Bereichen (A) enthaltenen Punkt erreichen und die gehobene Last verwalten kann, unter Einhaltung von Stabilitätsanforderungen in Abhängigkeit von der gehobenen Last und der Position des Arms (6);
- Bereiche mit Vorgängen in der Nähe der zulässigen Grenze (B); und
- Bereiche mit verbotenen Vorgängen (C), wobei das Fahrzeug (1) nicht in der Lage ist, einen in diesen Bereichen (C) enthaltenen Punkt zu erreichen oder die gehobene Last zu verwalten, unter Einhaltung von Stabilitätsanforderungen in Abhängigkeit von der gehobenen Last und der Position des Arms (6).

14. Ein multifunktionales Hubfahrzeug (1) nach Anspruch 13, **dadurch gekennzeichnet, dass** die angezeigten Informationen ein Raster von Werten zur Angabe der Abstände und Höhen der verschiedenen Elemente der Umgebung umfassen.

15. Ein Verfahren zum Verwalten einer Last, die von einem multifunktionalen Hubfahrzeug (1) nach einem der vorhergehenden Ansprüche bewegt wird, umfassend:
- Verbinden der Anzeigevorrichtung (20) mit der elektronischen Einheit (E) des Fahrzeugs (1);
- Aktivieren des Sichtsystems;
- Steuern des Fahrzeugs (1) von einer Fahrerkabine des genannten Fahrzeugs (1) oder von einem entfernten Ort aus;
- Erzeugen einer Mixed-Reality-Visualisierung der Umgebung auf der Grundlage von durch das Sichtsystem (20) erfassten Daten, durch Kombination der realen physischen Umgebung mit spezifisch erzeugten virtuellen Elementen, um das Fahren des Fahrzeugs (1) und das Lastmanagement in Echtzeit zu erleichtern.

## Revendications

1. Véhicule de levage multifonctionnel (1) comprenant :
- un châssis de base (2),
- un ensemble de levage (5) incluant au moins un bras de travail (6) équipé d'un attelage (7) pour le montage d'un outil (8),
- un système de commande de l'ensemble de levage (5), comprenant au moins une unité de commande électronique (E) et une pluralité de capteurs (10,11,12,21,22) agencés pour acquérir une pluralité de données de stabilité du véhicule (1), incluant la position du bras par rapport au châssis de base (2) et la quantité de charge levée par l'outil (8),
- un système de vision monté sur le châssis de base (2), comprenant au moins une caméra (13,14,15,16,17) configurée pour acquérir des images et détecter des événements se produisant à l'extérieur du véhicule (1), et au moins un dispositif de détection (18,19) pour mesurer la distance d'un objet à l'extérieur du véhicule (1),
- un dispositif de visualisation (20) du type affichage tête haute connecté de manière fonctionnelle à ladite unité de commande électronique (E), configuré et programmé pour générer une visualisation de l'environnement environnant sur la base de données acquises par le système de vision, en combinant l'environnement physique réel avec des éléments virtuels spécifiquement générés pour faciliter en temps réel la conduite du véhicule (1) et la gestion de la charge,
**caractérisé en ce que** :
- ledit dispositif de visualisation (20) du type affichage tête haute est un dispositif de visualisation en réalité mixte avec vidéo pass-through,
- ladite visualisation de l'environnement environnant est une visualisation en réalité mixte,
- ledit dispositif de visualisation en réalité mixte (20) du type affichage tête haute avec vidéo pass-through est un dispositif portable par un opérateur et connectable de manière fonctionnelle à l'unité de commande électronique (E) du véhicule (1), ledit dispositif portable comprenant un élément d'affichage à placer devant les yeux de l'opérateur et une structure de support pour positionner de manière stable le dispositif sur la tête de l'opérateur.

2. Véhicule de levage multifonctionnel (1) selon la revendication 1, **caractérisé en ce que** l'unité de commande électronique (E) est agencée pour commander des vannes de travail respectives d'un circuit hydraulique pour faire fonctionner l'ensemble de levage (5).

3. Véhicule de levage multifonctionnel (1) selon les revendications 1 ou 2, **caractérisé en ce que** le système de commande peut comprendre une unité d'identification configurée pour identifier le type d'outil (8) appliqué au bras (6).

4. Véhicule de levage multifonctionnel (1) selon l'une quelconque des revendications précédentes, **caractérisé en ce que** le système de vision comprend une ou plusieurs des caméras suivantes :
- une première caméra (13) montée à l'extrémité du bras (6) à proximité de l'attelage (7) pour connecter l'outil (8),
- une deuxième caméra (14) montée sur une partie avant du châssis (2), de manière à acquérir des images du scénario devant le châssis (2) à une hauteur inférieure à celle de la première caméra (13),
- une troisième caméra (15) montée sur le dessus du châssis (2), en particulier au-dessus d'une paroi horizontale supérieure définissant une cabine de conduite du véhicule (1),
- une quatrième caméra (16) montée sur une extrémité arrière du châssis (2), afin d'acquérir des images du scénario qui apparaît derrière le véhicule (1),
- des caméras supplémentaires (17) montées le long d'un panneau latéral respectif du châssis (2).

5. Véhicule de levage multifonctionnel (1) selon l'une quelconque des revendications précédentes, **caractérisé en ce que** ledit dispositif de détection (18,19) est configuré pour transmettre/recevoir des signaux avec une technologie radar ou lidar ou des caméras stéréo, pour détecter la présence d'objets externes et calculer la position et la distance d'un objet par rapport au véhicule (1).

6. Véhicule de levage multifonctionnel (1) selon la revendication 5, **caractérisé en ce que** le système de vision comprend un premier dispositif de détection (18) positionné à l'extrémité du bras (6) et/ou un deuxième instrument de détection (19) positionné sur une partie avant du châssis (2).

7. Véhicule de levage multifonctionnel (1) selon l'une quelconque des revendications précédentes, **caractérisé en ce que** le dispositif de visualisation (20) comprend un processeur électronique en communication fonctionnelle avec l'unité électronique (E) du véhicule, pour recevoir des données acquises au moyen desdits capteurs (10,11,12,21,22) et du système de vision.

8. Véhicule de levage multifonctionnel (1) selon la revendication 7, **caractérisé en ce que** l'unité électronique (E) du véhicule (1) et/ou le processeur du dispositif de visualisation (20) sont configurés pour utiliser des algorithmes d'analyse de données automatiques basés sur des principes d'apprentissage automatique.

9. Véhicule de levage multifonctionnel (1) selon l'une quelconque des revendications précédentes, **caractérisé en ce que** ladite visualisation en réalité mixte comprend une reproduction de certaines parties de l'environnement environnant qui sont cachées à la vue de l'opérateur situé à un poste de commande du véhicule (1), à bord ou à distance, combinée à une vue de dispositifs de commande associés.

10. Véhicule de levage multifonctionnel (1) selon l'une quelconque des revendications précédentes, **caractérisé en ce qu'**il comprend au moins un élément de commande associé au dispositif de visualisation (20), pour faire varier le point d'observation de la reproduction mixte et/ou un mode de visualisation de certaines parties du véhicule (1).

11. Véhicule de levage multifonctionnel (1) selon l'une quelconque des revendications précédentes, **caractérisé en ce que** le dispositif de visualisation en réalité mixte (20) est configuré pour montrer plusieurs informations superposées utiles à l'opérateur pour conduire le véhicule et gérer la charge levée, telles que le type d'outil (8) connecté et/ou la position et le poids de la charge levée.

12. Véhicule de levage multifonctionnel (1) selon l'une quelconque des revendications précédentes, **caractérisé en ce que** ladite visualisation en réalité mixte inclut une visualisation des différents éléments de l'environnement environnant, en associant ces éléments à différentes bandes de charge selon la possibilité de commander le véhicule pour interagir avec un élément déterminé dans des conditions de sécurité ou non.

13. Véhicule de levage multifonctionnel (1) selon la revendication 12, **caractérisé en ce que** lesdites bandes de charge sont reproduites selon différentes sous-zones de la zone globale de l'environnement de travail, en particulier :
- des zones avec des opérations autorisées (A), dans lesquelles le véhicule (1) peut atteindre un point inclus dans ces zones (A), et gérer la charge levée, en respectant des exigences de stabilité dépendant de la charge levée et de la position du bras (6) ;
- des zones avec des opérations à proximité de la limite autorisée (B) ; et
- des zones avec des opérations interdites (C), dans lesquelles le véhicule (1) est incapable d'atteindre un point inclus dans ces zones (C) ou de gérer la charge levée, en respectant des exigences de stabilité dépendant de la charge levée et de la position du bras (6).

14. Véhicule de levage multifonctionnel (1) selon la revendication 13, **caractérisé en ce que** les informations affichées comprennent une grille de valeurs pour indiquer les distances et les hauteurs des différents éléments de l'environnement environnant.

15. Procédé de gestion d'une charge déplacée par un véhicule de levage multifonctionnel (1) selon l'une quelconque des revendications précédentes, comprenant :
- la connexion du dispositif de visualisation (20) à l'unité électronique (E) du véhicule (1) ;
- l'activation du système de vision ;
- la commande du véhicule (1) depuis une cabine de conduite dudit véhicule (1) ou depuis un emplacement distant ;
- la génération d'une visualisation en réalité mixte de l'environnement environnant sur la base de données acquises par le système de vision (20), en combinant l'environnement physique réel avec des éléments virtuels spécifiquement générés pour faciliter en temps réel la conduite du véhicule (1) et la gestion de la charge.
